# EUROPÄISCHE PATENTANMELDUNG

(11) **EP 2 015 440 A2**
(43) Veröffentlichungstag der Anmeldung: **14.01.2009**
(21) Anmeldenummer: 08155877.7
(22) Anmeldetag: 08.05.2008
(51) Int. Cl.: H02P 3/08

(54) **Verfahren und Vorrichtung zum Stillsetzen einer Druckmaschine bei Netzausfall**

(30) Priorität: 23.08.2007 DE 102007039915; 13.07.2007 DE 102007032747
(71) Anmelder: WIFAG Maschinenfabrik AG, 3001 Bern (CH)
(72) Erfinder: Burri, Daniel, 3510 Konolfingen (CH); Fröhlich, Martin, 3098 Köniz (CH)
(74) Vertreter: Schwabe - Sandmair - Marx

(57) **Zusammenfassung**

Die vorliegende Erfindung betrifft ein Verfahren zum Stillsetzen einer Druckmaschine bei Netzausfall, wobei ein Netzausfall des Versorgungsnetzes detektiert wird und bei Detektion des Netzausfalls die Druckmaschine vom elektrischen Netz getrennt wird, sowie eine Vorrichtung zum Stillsetzen einer Druckmaschine bei Netzausfall mit einem Netzausfalldetektionselement und einem Netztrennelement, welches mit dem Netzausfalldetektionselement verbunden ist und bei Detektion des Netzausfalls die Druckmaschine vom elektrischen Netz trennen kann.

## Beschreibung

Die Erfindung betrifft ein Verfahren und eine Vorrichtung zum Stillsetzen einer Druckmaschine bei Netzausfall und kann insbesondere bei Rotationsdruckmaschinen mit Direktantriebstechnik eingesetzt werden.

Spätestens seit der Einführung der Direktantriebstechnik im Druckmaschinenbau sind Antriebssysteme an Druckmaschinen bekannt, die aus dem dreiphasigen elektrischen Versorgungsnetz über einen Gleichrichter einen Gleichspannungszwischenkreis speisen. Diese Gleichrichter sind auch in der Lage Energie aus dem Zwischenkreis in das elektrische Netz zurückzuspeisen. Aus diesem Zwischenkreis werden über geeignete Wechselrichter die Antriebe der Druckmaschine mit Energie versorgt. Auch diese Wechselrichter sind in der Lage Energie aus den Antrieben in den Zwischenkreis zurückzuspeisen. Diese Eigenschaften werden seit der Einführung der Direktantriebstechnik verwendet, um den gesamten Energiebedarf der Druckmaschine zu verringern. Ebenfalls seit diesem Zeitpunkt ist die Idee bekannt, bei Netzausfall den kinetischen Energieinhalt zu nutzen, um die Druckmaschine kontrolliert stillzusetzen.

Es ist möglich, dass die kinetische Energie des Gesamtsystems ausgenutzt wird, um die Maschine stillzusetzen, wie z.B. in der EP 0 747 214 A2 beschrieben. Die Bremsrampe wird dabei vorzugsweise so gewählt, dass die Gleichstromzwischenkreise immer auf der vollen Gleichspannung betrieben werden. Bei kleinen Drehzahlen steht jedoch zuwenig kinetische Energie zur Verfügung, um die Gleichstromzwischenkreise zu speisen. Wenn die Gleichstromzwischenkreise unter einen bestimmten Wert absinken, können die Antriebe nicht mehr kontrolliert werden.

Es kann die Netzspannung überwacht und bei Netzausfall können bewegliche Elemente abgebremst werden, wie in der DE 20 2005 020 612 U1 beschrieben. Die kinetische Energie wird bei diesem Vorgang in elektrische Energie umgewandelt, die zur Weiterführung des Betriebs der Anlage verwendet wird. Die Ausführung ohne externe Schwungräder hat den Nachteil, dass bei kleinen Drehzahlen zu wenig Energie zur Verfügung steht, um die Antriebe zu kontrollieren. Die Ausführung mit externen Schwungrädern hat den Nachteil, dass diese externen rotierenden Massen den Gesamtwirkungsgrad der Anlage negativ beeinflussen. Zudem ist die Dimensionierung dieser Massen abhängig von der Anlagengröße. Insbesondere bei nachträglichen Anlagenerweiterungen fallen wiederum beträchtliche Kosten für die Erweiterung der externen Schwungmassen an.

Gleichspannungszwischenkreise können über einen Gleichspannungsversorgungsbus parallel geschaltet sein, wie in der EP 1 593 501 A2 beschrieben. Dieser Versorgungsbus wird z.B. von einem Versorgungsmodul mit einer gleichgerichteten Netzeingangsspannung versorgt. Eine solche Einrichtung hat den Nachteil, dass der Zwischenkreis, der über die ganze Maschine gerührt wird, über einen einzigen Gleichrichter eingespeist wird. Fällt dieser Gleichrichter aus, kann die ganze Maschine nicht mehr betrieben werden. Zudem muss dieser Gleichrichter sehr leistungsstark ausgeführt werden, da er die ganze Maschine mit Gleichstrom versorgen muss. Insbesondere dann, wenn nur Teile der Druckmaschine verwendet werden, fallen unnötige Verluste in Drosselspule und dergleichen an.

Es kann eine unterbrechungsfreie Stromversorgung (USV) verwendet werden, die der Druckmaschine vorgeschaltet wird, wie in der EP 1 223 656 A1 beschrieben. Bei einem Netzausfall wird dann z.B. eine Steuerfolge abgearbeitet, die einen standardmäßig definierten Produktionshalt auslöst und im weiteren Verlauf wird die Druckmaschine in einen Standby-Betrieb versetzt. Einzelne Verbraucher in Form von Kühlaggregaten und Pumpen können abgeschaltet werden. Eine solche Einrichtung hat den Nachteil, dass die Maschine über die USV betrieben wird. Dadurch entstehen nicht unerhebliche Verluste in der Größenordnung von einigen Prozenten der bezogenen Leistung. Ein Dauerbetrieb lohnt sich daher nur für Netze mit einer relativ hohen Ausfallwahrscheinlichkeit.

Druckmaschinen mit Direktantrieben haben den Nachteil, dass Spannungseinbrüche und Spannungsunterbrüche in der Regel zum Riss von allen Bahnen führen, da die Antriebe nicht mehr kontrolliert werden können. Bei zeitkritischen Produktionen kann schon ein einzelner Zwischenfall zu einer uneinholbaren Verspätung führen.

Solche Zwischenfälle können z.B. durch Vorschalten von rotierenden USV-Anlagen verhindert werden, wie z.B. in der EP 0 872 942 A2 beschrieben. Solche Lösungen sind auf der einen Seite teuer in der Anschaffung, auf der anderen Seite teuer im Betrieb aufgrund ihrer eigenen Verluste. Des Weiteren sind diese Anlagen nur bedingt erweiterbar. Das heißt, dass jede Maschinenerweiterung entweder von Anfang an eingeplant werden muss, oder es muss beim Zeitpunkt des Maschinenausbaus mit erheblichen Kosten für die Erweiterung der USV-Anlage gerechnet werden.

Mit der vorliegenden Erfindung soll nun das Problem der nichtkontrollierbaren Antriebe gelöst werden, ohne dabei die beschriebenen Nachteile in Kauf nehmen zu müssen. Die Druckmaschine soll bei Netzausfall ohne Papierriss stillgesetzt werden können.

Das dezentrale Gleichspannungszwischenkreis-Einspeisekonzept soll vorzugsweise beibehalten werden können. Damit wird die Zuverlässigkeit der Anlage auf hohem Niveau gehalten und die einzelnen Maschinenmodule können rationell gefertigt und getestet werden.

Die erfindungsgemäße Eirnichtung soll keine oder praktisch keine zusätzlichen Energieverluste erzeugen und soll bei einer Maschinenerweiterung ohne spezielle Investitionen automatisch der neuen Maschinengröße angepasst werden können.

Des Weiteren soll die Erfindung das Problem lösen, dass bei kleinen Maschinendrehzahlen zuwenig kinetische Energie zur Stillsetzung der Antriebe zur Verfügung steht.

Wird ein Netzausfall detektiert, indem z.B. die Spannung im Versorgungsnetz innerhalb eines vorgegebenen Zeitraums von einigen (z.B. 1, 2, 5, 10, 20, 50, 100, 200 oder 500) ms unter einen vorgegebenen Mindestwert von z.B. 80% oder 85% der Nenn- oder auch Maximalspannung abfällt, so wird in einem ersten Schritt die Trennung der Maschine vom elektrischen Netz sichergestellt. Das kann über einen herkömmlichen Leistungsschalter, einen Hauptschütz, oder besonders vorteilhaft über einen schnellen Halbleiterschalter, wie z.B. einen Thyristor oder IGBT, erfolgen.

Die bekannten Lösungen weisen nicht daraufhin, dass die sichere und vor allem schnelle Netztrennung ein entscheidendes Merkmal eines Stillsetzverfahrens bei Netzausfall ist.

Die Regelung und damit die Aufrechterhaltung der Zwischenkreisspannung in den Antriebssystemen hat Priorität. Die Antriebe der Druckmaschine werden entsprechend gesteuert.

Vorzugsweise wird nach der Detektion eines Netzausfalls die Druckmaschine so vom externen elektrischen Versorgungs- oder Stromeinspeisenetz getrennt, dass an der Druckmaschine ein Inselnetz aufgebaut wird oder ist, welches mindestens zwei und bevorzugt mehrere Druckmaschinenkomponenten, wie z.B. den Rollenwechsler, Drucktürme, Wendeetagen und/oder einen Falzturm miteinander verbindet. Dabei weisen die einzelnen Druckmaschinenkomponenten jeweils mindestens eine Versorgungseinheit auf, welche an das z.B. im Dreiphasenbetrieb oder Gleichstrombetrieb betriebenen Inselnetz angeschlossen ist und welche z.B. über einen Gleichstrom (DC)-Zwischenkreis ein oder mehrere Motoren der jeweiligen Druckmaschinenkompanente z.B. über zwischengeschaltete AC/DC-Wandler (Gleichrichter) und/oder DC/AC-Wandler (Wechselrichter) mit Strom versorgt werden können. Das Inselnetz der Druckmaschine wird dabei vorzugsweise zur Synchronisation der Druckmaschinenkomponenten untereinander und besonders bevorzugt zur Synchronisation mehrerer zu einem Antriebsverbund zusammengeschalteter Druckmaschinenkomponenten oder Versorgungseinheiten verwendet, welche auch getrennt voneinander angetrieben oder gespeist werden können und vorzugsweise zumindest innerhalb des jeweiligen Antriebsverbundes synchronisiert sind. Dabei wird vorteilhaft ein Antriebsverbund durch papierführende Elemente, wie z.B. Rollenwechsler, Wendeetagen und Falzturm, und ein davon getrennter Antriebsverbund durch nicht-papierführende Druckmaschinenkomponenten, wie z.B. die Drucktürme, gebildet.

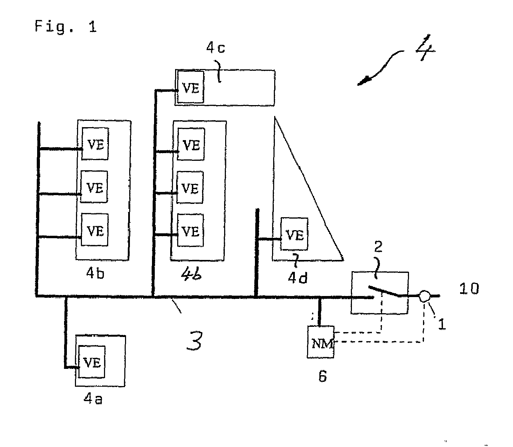

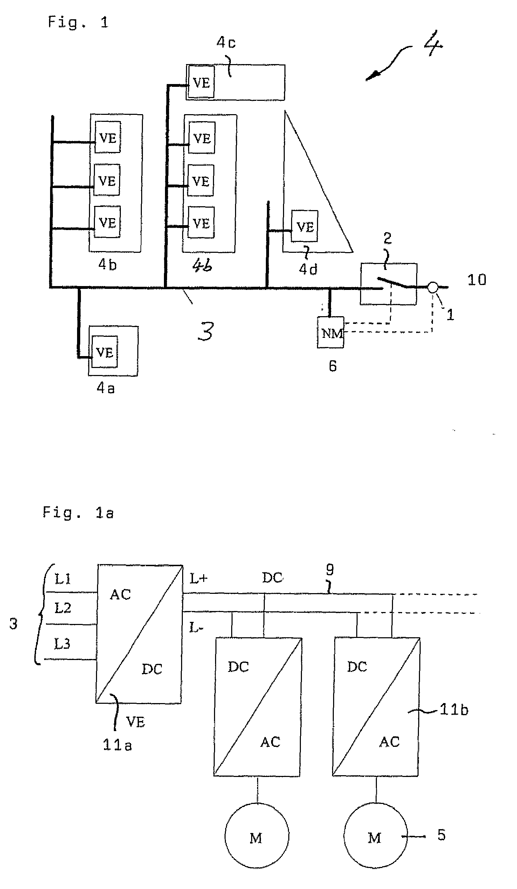

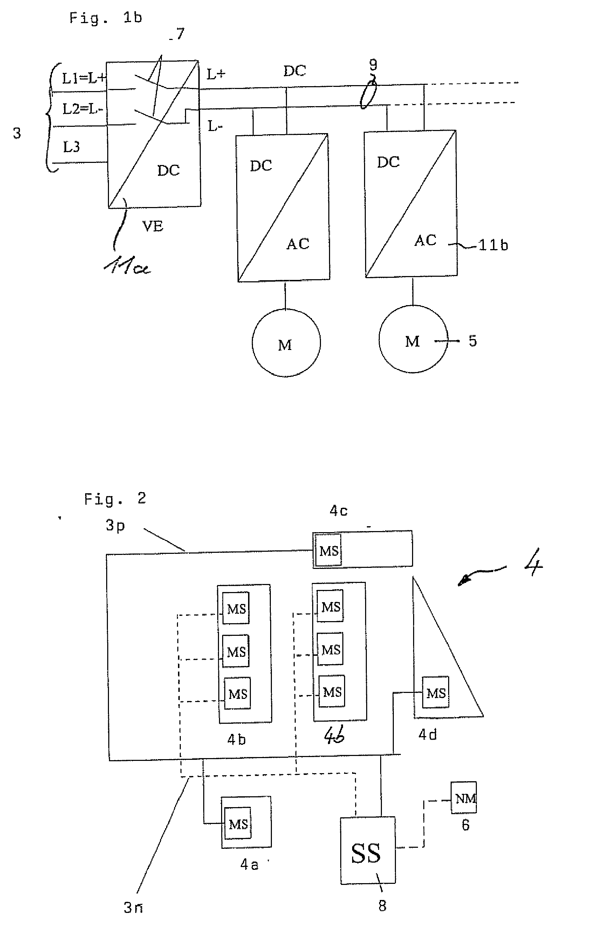

In dem Inselnetz oder auch in dem Zwischenkreis kann ein Dreiphasensystem ebenso wie ein Gleichspannungssystem verwendet werden, wie nachfolgend insbesondere unter Bezugnahme auf die Figuren 1a und 1b detaillierter beschrieben. Prinzipiell ist es auch möglich, falls das Inselnetz der Druckmaschine in mindestens zwei getrennte Netze aufgeteilt wird, um z.B. einen Verbund papierführender Elemente und einen davon getrennten Verbund nicht-papierführende Elemente zu bilden, dass in jedem Verbund das gleiche System (Dreiphasensystem oder Gleichspannungssystem) verwendet wird oder dass getrennte Kreise oder Verbünde unterschiedliche Systeme verwenden, also z.B. ein Gleichspannungssystem im Verbund papierführender Elemente und ein Dreiphasensystem oder Wechselstromsystem im Verbund nicht-papierführender Elemente oder umgekehrt.

Vorteilhaft werden Einheiten oder Druckmaschinenkomponenten, welche bei der Umstellung des bisher innerhalb der Druckmaschine verwendeten Spannungssystems beschädigt werden könnten, vor dieser Umstellung auf z.B. einen Gleichstrom-Betrieb oder einen zweiphasigen Wechselstrombetrieb, abgeschaltet.

Vorzugsweise werden diejenigen Druckmaschinenkomponenten oder Elemente, welche in Kontakt mit der Papierbahn sind, aber keine papierführenden Elemente sind, wie z.B. Walzen in den Drucktürmen, von der Papierbahn abgestellt, wenn ein Netzausfall detektiert wird, um bei einer möglichen nachfolgende Aufteilung des Antriebsverbundes eine Beeinflussung der durch die Druckmaschine geführten Papierbahn zu verhindern, so dass die Papierbahn vorzugsweise nur durch das kontrollierte Herunterfahren des Antriebsverbundes papierführender Elemente kontrolliert und möglichst beschädigungsfrei heruntergefahren und stillgesetzt werden kann.

Sofern in dieser Anmeldung von dem Stillsetzen oder Herunterfahren einer Druckmaschine gesprochen wird, soll darunter sowohl der Vorgang des Abbremsens, als auch ein Beschleunigungsvorgang, verstanden werden, welche jeweils das Ziel haben Druckmaschinenkomponenten in Richtung auf das gewünschte kontrollierte Herunterfahren oder Stillsetzen der Druckmaschine möglichst aufeinander synchronisiert herunterzufahren. Dies kann, falls z.B. durch eine Steuereinheit festgestellt wird, dass eine Druckmaschinenkomponente oder ein Motor zu schnell abgebremst wurde, auch ein Beschleunigen der jeweiligen Komponente oder des jeweiligen Motors erforderlich machen, um wieder mit den anderen Komponenten z.B. eines Antriebsverbundes synchronisiert zu sein.

Gemäß einem weiteren Aspekt bezieht sich die Erfindung auf ein Verfahren zum Anfahren einer Druckmaschine, um die Druckmaschine bei einem detektierten Netzausfall auch kontrolliert stillsetzen oder herunterfahren zu können, wobei erfindungsgemäß zunächst die Druckwerke beschleunigt werden und anschließend nach teilweiser oder vollständiger Beschleunigung der Druckwerke die Papierbahn mit den papierführenden Elementen beschleunigt wird. Dies ist vorteilhaft, da bei einem detektierten Netzausfall die Papierbahn möglichst kontrolliert abgebremst oder stillgesetzt werden soll, was möglicherweise zusätzliche Energie zum kontrollierten Herunterfahren erfordert, welche beispielsweise aus den zuvor beschleunigten Druckwerken und insbesondere aus deren Abbremsvorgang bei der Umwandlung kinetischer Energie in elektrische Energie und Rückspeisung ins Inselnetz gewonnen werden kann.

Allgemein kann zum kontrollierten Herunterfahren oder Stillsetzen einer Druckmaschine Energie aus dem Abbremsvorgang der herunterzufahrenden Druckmaschinenkomponenten gewonnen und z.B. in das Inselnetz der Druckmaschine eingespeist werden, so dass die kinetische Energie des Gesamtsystems ausgenutzt wird, um die Druckmaschine stillzusetzen, wie auch im oben beschriebenen Stand der Technik beschrieben, dessen diesbezügliche Lehre in diese Anmeldung aufgenommen wird. Die Gewinnung von elektrischer Energie aus kinetischer Energie von Druckmaschinenkomponenten ist im Stand der Technik bekannt, wie beispielhaft oben erwähnt, und wird folglich in dieser Anmeldung nicht detaillierter beschrieben.

Ergänzend oder alternativ ist es auch möglich, dass externe oder zusätzliche Komponenten oder eine unterbrechungsfreie Stromversorgung verwendet werden, um die für das Stillsetzen oder kontrollierte Herunterfahren der Druckmaschine erforderliche Energie zu liefern. Externe oder zusätzliche Energiespeicher, wie z.B. ein oder mehrere Generatoren mit Verbrennungsmotor, zusätzliche Schwungmassen, Pufferkondensatoren, Akkumulatoren, Brennstoffzellen etc. sind im Stand der Technik bekannt und können erfindungsgemäß zur Energieversorgung der Druckmaschine und insbesondere zur Speisung des Inselnetzes verwendet werden, um z.B. unterbrechungsfrei zumindest für den Zeitraum nach dem Netzausfall oder nach dem Trennen des Inselnetzes vom Versorgungsnetz bis zum kontrollierten Herunterfahren oder Stillsetzen der Druckmaschine Strom (Drehstrom, Wechselstrom und bevorzugt Gleichstrom) zu liefern.

Über einen Netzmaster wird im Inselnetz der Maschine z.B. ein 3-phasiges elektrisches Netz aufgebaut. Alle verbundenen Elemente synchronisieren sich mit diesem Netz und können damit Energie austauschen. Besonders vorteilhaft ist dabei, dass anfallende Energie nicht in Bremswiderständen verheizt werden muss, sondern anderen Elementen zur Verfügung gestellt werden kann. Daraus ergibt sich eine flachere Anhalterampe, durch welche Papierrisse verhindert werden können.

Es ist auch möglich, dass die über die Maschine verteilten Versorgungseinheiten VE nach dem Trennen der Maschine vom elektrischen Netz auf der bestehenden 3-phasigen Verkabelung ein DC-Netz aufbauen. Über diesen temporär gebildeten Zwischenkreis können jetzt die einzelnen Antriebe auf einfachste Weise Energie austauschen.

Bei dieser Lösung entfällt der Nachteil, dass eine zentrale große Einspeiseeinheit erforderlich ist und dass der DC-Bus physikalisch auf der Maschine verlegt werden muss. Zudem ist die hier vorgeschlagene Lösung skalierbar. Das heißt wenn die Maschine mit weiteren Elementen ausgebaut wird, muss keine zentrale Gleichstromversorgungseinheit vergrößert werden.

Vorzugsweise können mehrere Antriebsverbunde gebildet werden. Das hat den Vorteil, dass z.B. papierführende Elemente schneller abgebremst werden als nicht papierführende Elemente. Damit ist sichergestellt, dass auch bei kleiner Drehzahl die papierführenden Elemente mit Energie versorgt werden können.

Es kann sein, dass die Papierbahn erst nach den Druckwerken beschleunigt wird. Dieser Umstand kann verwendet werden, um sicherzustellen, dass die papierführenden Elemente im Falle eines Netzausfalles bereits bei kleinen Drehzahlen mit genügend Energie aus den Druckwerken versorgt werden können.

Nachfolgend wird eine bevorzugte Ausführungsform unter Bezugnahme auf die beiliegenden Figuren beschrieben. Es zeigen:
- Figur 1: eine schematische Darstellung einer Druckmaschine mit einem Stromver- sorgungsnetz;
- Figur 1A: eine erste Ausführungsform einer mit einem Dreiphasennetz verbundenen Versorgungseinheit;
- Figur 1B: eine zweite Ausführungsform einer mit einem Gleichspannungsnetz ver- bundenen Versorgungseinheit;
- Figur 2: eine schematische Darstellung der in Figur 1 gezeigten vom Versorgungs- netz getrennten Druckmaschine aufgeteilt in getrennte Antriebsverbunde;
- Figur 3: das Herunterfahren der Antriebsverbunde nach Detektion eines Spannungs- ausfalles gemäß einer ersten Ausführungsform; und
- Figur 4: das Herunterfahren der Antriebsverbunde nach Detektion eines Spannungs- ausfalles gemäß einer zweiten Ausführungsform.

Figur 1 zeigt eine schematische Darstellung einer Druckmaschine 4 bestehend aus den Funktionseinheiten Rollenwechsler 4a, Drucktürme 4b, Wendeetagen 4c und Falzturm 4d. Die Druckmaschinenkomponenten 4a bis 4d weisen jeweils mindestens eine Versorgungseinheit VE auf, welche mit dem in Fettdruck dargestellten Netz 3 der Druckmaschine 4 verbunden sind. In dem Netz 3 der Druckmaschine 4 kann z.B. ein Drei-Phasensystem oder ein Gleichstromsystem realisiert sein. Die mit dem Netz 3 verbundenen Versorgungseinheiten VE speisen jeweils über Gleichrichter 11a Gleichstrom in Zwischenkreise 9 der durch Motoren 5, welche über Wechselrichter 11b gespeist werden, angetriebenen Antriebssysteme.

Ein Netzausfallsdetektionselement 1 führt eine Netzmessung des 3-phasigen Versorgungsnetzes 10 durch und ist mit einem Netzmaster 6 verbunden, welcher ein Netztrennelement 2 z.B. in Form eines Leistungsschalters ansteuert, um bei einem detektierten Netzausfall oder einem detektierten Absenken oder Nachlassen der Netzspannung das Netz 3 der Druckmaschine 4 von dem externen oder Speisenetz 10 zu trennen.

Der Netzmaster 6 detektiert den Netzausfall und trennt das elektrische Maschinennetz 3 sofort vom elektrischen Versorgungsnetz ab. Die Antriebe werden so geregelt, dass die Zwischenkreisspannungen aller Versorgungssysteme in einem zulässigen Bereich sind.

Wenn möglich werden die Elemente, welche sich an der Papierbahn befinden und diese nicht führen, vom Papier abgestellt (z.B. Druckbrücken), damit sie mit einer beliebigen Drehzahl betrieben werden können.

Der Netzmaster 6 baut ein elektrisches Inselnetz auf, mit dem die Antriebssysteme und insbesondere die Motoren 5, welche beim Abbremsen auch als Generatoren 5 betrieben werden können, Energie in beide Richtungen austauschen können. Dieses Inselnetz kann ein Dreiphasensystem mit Gleichrichter 11a und Wechselrichter 11b (Fig. 1a), aber auch ein Gleichspannungssystem (Fig. 1b) sein. Wird ein Gleichspannungssystem aufgebaut, schalten die Versorgungseinheiten ihren internen DC-Zwischenkreis 9 auf die Dreiphaseninstallation der Maschine z.B. mittels Transistorschalter 7 durch. Zum Beispiel wird L1 zu L+ und L2 zu L-. Alle Elemente, die durch die DC Spannung beschädigt werden könnten, sollten zum Zeitpunkt des Aufschaltens der DC-Spannung abgetrennt sein.

Figur 2 zeigt die in Figur 1 gezeigte schematische Darstellung der Druckmaschine 4, welche nach Detektion eines Netzausfalls bereits vom externen oder Stromeinspeisungsnetz 10 getrennt wurde. Der Netzmaster 6 ist mit der Sektionssteuerung SS 8 verbunden, welche getrennt voneinander den Verbund papierführender Elemente 3p und den Verbund nicht papierführender Elemente 3n steuert. Über den Verbund papierführender Elemente 3p sind der Rollenwechsler 4a, die Wendeetagen 4c und der Falzturm 4d miteinander verbunden, wobei jeweils mindestens eine Modulsteuerung MS zur Steuerung der jeweiligen Druckmaschinenkomponente 4a, 4c und 4d vorgesehen ist. Der Verbund nicht papierführender Elemente 3n umfasst die Drucktürme 4e, deren Druckwalzen vorzugsweise schon unmittelbar nach der Detektion des Netzausfalles von der Papierbahn abgestellt worden sind.

Der Antriebsverbund der Maschine wird somit aufgeteilt in papierführende und nicht papierführende Elemente. Damit wird sichergestellt, dass die papierführenden Elemente 4a, 4c, 4d bis zum Stillstand mit Energie versorgt werden können, welche z.B. aus den abgebremsten Drucktürmen 4b stammt. Es können auch beliebige weitere Antriebsverbunde gebildet werden, zum Beispiel um die Regelung des Inselnetzes zu verbessern. Der Antriebsverbund wird z.B. aufgetrennt, indem zwei oder mehr Leitachssollwerte auf der Maschine verteilt werden. Die Leitachssollwerte werden über einen geeigneten Feldbus, z.B. Sercos, an die Modulsteuerungen gesendet.

Das Inselnetz 3 kann z.B. in galvanisch getrennte Systeme oder Verbunde aufgeteilt werden, welche jedoch elektrische Leistung oder Signale untereinander austauschen können. Alternativ oder ergänzend ist es auch möglich, dass ein oder mehrere Verbunde gebildet werden, welche sich steuerungstechnisch an verschiedenen innerhalb des Verbundes jedoch vorgegebenen Führungssollwerten oder Leitachsen orientieren. In diesem Fall können die in Figur 2 gezeigten Verbunde 3p und 3n auch als so genannte virtuelle Verbunde angesehen werden.

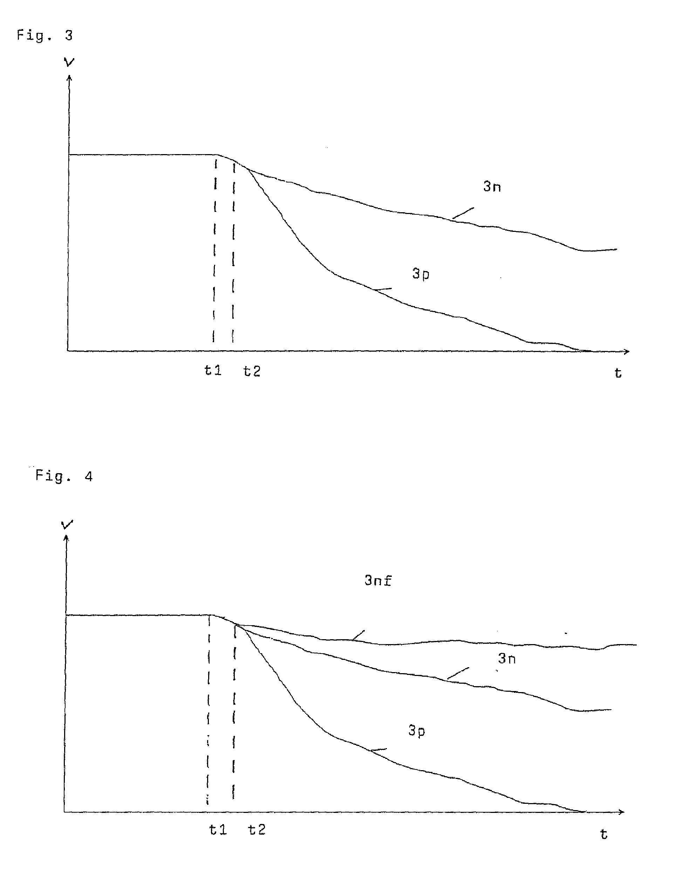

Figur 3 zeigt die als Sollwert vorgegebene Produktionsgeschwindigkeit v aufgetragen über die Zeit t vor und nach einem zum Zeitpunkt t1 stattfindenden Spannungsausfall.

Nach Detektion des Spannungsausfalles wird der Antriebsverbund zum Zeitpunkt t2 aufgeteilt in den Verbund nicht papierführender Elemente 3n und den Verbund papierführender Elemente 3p, welche unabhängig voneinander, wie aus Figur 3 ersichtlich, heruntergefahren werden.

Eine Leitachse 3n führt die nicht papierführenden Elemente. Nach Bedarf werden diese gebremst oder beschleunigt mit dem Ziel die dreiphasige Netzspannung und Frequenz bzw. die Gleichspannung in zulässigen Grenzen zu halten.

Eine Leitachse 3p führt die papierführenden Elemente. Diese Maschinenteile werden in einer geeigneten Funktion stillgesetzt. Diese Funktion ist abhängig von der Anzahl und der Art der beteiligten Elemente, sowie der Größe der Papierrollen zum Zeitpunkt des Spannungsausfalls.

Figur 4 zeigt das Herunterfahren einer Druckmaschine nach der Detektion eines Netz- oder Spannungsausfalles gemäß einer weiteren Ausführungsform, wobei eine weitere Leitachse ein nicht papierführendes Element 3nf steuern kann, das zur Feinregelung des Inselnetzes verwendet wird. In diesem Fall wird mit der Leitachse 3n der nicht papierführenden Elemente dafür gesorgt, dass der Speicher des nicht papierführenden Elementes zur Feinregelung des Netzes immer genügend gefüllt ist.

## Patentansprüche

1. Verfahren zum Stillsetzen einer Druckmaschine (4) bei Netzausfall, wobei ein Netzausfall des Versorgungsnetzes (10) detektiert wird und bei Detektion des Netzausfalls die Druckmaschine (4) vom elektrischen Netz (10) getrennt wird.

2. Verfahren zum Stillsetzen einer Druckmaschine bei Netzausfall gemäß Anspruch 1, wobei nach Detektion des Netzausfalles innerhalb der Druckmaschine (4) ein Inselnetz (3) bestehend aus mindestens zwei Druckmaschinenkomponente (4a, 4b, 4c, 4d) gebildet wird, welches mindestens zwei Druckmaschinenkomponenten (4a, 4b, 4c, 4d) miteinander verbindet und zur Synchronisation der Druckmaschinenkomponenten (4a, 4b, 4c, 4d) und/oder zum synchronen oder kontrollierten Abbremsen oder Herunterfahren der Druckmaschinenkomponenten (4a, 4b, 4c, 4d) verwendet werden kann.

3. Verfahren nach einem der vorhergehenden Ansprüche, wobei das Inselnetz (3) in mindestens zwei oder drei getrennte Verbundsysteme (3n, 3p, 3nf) aufgeteilt wird.

4. Verfahren nach dem vorhergehenden Anspruch, wobei mindestens ein Verbund papierführender Elemente (3p) und mindestens ein Verbund nicht papierführender Elemente (3n, 3nf) gebildet wird.

5. Verfahren nach einem der vorhergehenden Ansprüche, wobei in dem Inselnetz (3) und/oder mindestens einem Verbund (3p, 3n, 3nf) ein Dreiphasensystem realisiert wird.

6. Verfahren nach einem der vorhergehenden Ansprüche, wobei in dem Inselnetz (3) und/oder mindestens einem Verbund (3p, 3n, 3nf) ein Gleichstrom(DC)-System realisiert wird.

7. Verfahren nach dem vorhergehenden Anspruch, wobei durch Gleichstrom beschädigbare Einheiten der Druckmaschine (4) vor der Realisierung eines Gleichstromsystems im Inselnetz (3) abgeschaltet werden.

8. Verfahren nach einem der vorhergehenden Ansprüche, wobei nach der Detektion des Netzausfalles und insbesondere unmittelbar nach der Detektion des Netzausfalles von der Papierbahn abstellbare Elemente abgestellt werden.

9. Verfahren nach einem der vorhergehenden Ansprüche, wobei zum Stillsetzen oder Herunterfahren der Druckmaschine (4) einzelne Druckmaschinenkomponenten (4a-4d) oder Motoren (5) kontrolliert abgebremst oder durch Zufuhr von Energie aus dem Inselnetz (3) kontrolliert beschleunigt werden, um die Druckmaschine (4) kontrolliert herunterzufahren.

10. Verfahren nach einem der vorhergehenden Ansprüche, wobei ein Netzausfall detektiert wird, wenn mindestens fünf Millisekunden ein Spannungsabfall der Nennspannung im Einspeisenetz (10) festgestellt wird.

11. Verfahren zum Anfahren einer Druckmaschine (4), um die Druckmaschine (4) mit der ihr nach Beginn des Anfahrvorgangs innewohnenden Energie kontrolliert herunterzufahren zu können, wobei zuerst die Druckwerke (4b) beschleunigt werden und erst nach teilweiser oder vollständiger Beschleunigung der Druckwerke (4b) die Papierbahn oder die die Papierbahn führenden Druckmaschinenkomponenten (4a, 4c, 4d) beschleunigt werden.

12. Verfahren nach dem vorhergehenden Anspruch, wobei detektiert wird, ob ein Netzausfall vorliegt und nach Detektion des Netzausfalles die Druckwerke abgebremst werden und kinetische Energie aus dem Abbremsvorgang der Druckwerke in elektrische Energie umgesetzt wird, welche zum kontrollierten Herunterfahren der Papierbahn verwendet wird.

13. Vorrichtung zum Stillsetzen einer Druckmaschine (4) bei Netzausfall mit einem Netzausfalldetektionselement (1, 6) und einem Netztrennelement (2), welches mit dem Netzausfalldetektionselement (1,6) verbunden ist und bei Detektion des Netzausfalls die Druckmaschine (4) vom elektrischen Netz (10) trennen kann.

14. Vorrichtung zum Stillsetzen einer Druckmaschine (4) bei Netzausfall nach dem vorhergehenden Anspruch, wobei das Netztrennelement ein Leistungsschalter (2), ein Hauptschütz, oder ein schneller Halbleiterschalter ist.

15. Vorrichtung nach einem der zwei vorhergehenden Ansprüche, wobei sich die Druckmaschine (4) aus mehreren Funktionseinheiten (4a bis 4d) zusammensetzt, welche jeweils mindestens eine Versorgungseinheit (VE) und/oder eine Modulsteuerung (MS) aufweisen, die jeweils mit dem Netz (3) der Druckmaschine (4) verbunden sind.
